# EUROPEAN PATENT APPLICATION

(11) **EP 4 333 159 A1**
(43) Date of publication of application: **06.03.2024**
(21) Application number: 22216848.6
(22) Date of filing: 28.12.2022
(51) Int. Cl.: H01M 10/613, H01M 10/6556, H01M 10/6567, H01M 50/502, H01M 10/643

(54) **BATTERY CELL CONNECTING STRUCTURE, BATTERY PACK AND VEHICLE**

(30) Priority: 31.08.2022 CN 202211059222
(71) Applicant: Xiaomi EV Technology Co., Ltd., 100176 Beijing (CN)
(72) Inventor: LI, Wanming, Beijing, 100176 (CN)
(74) Representative: dompatent von Kreisler Selting Werner - Partnerschaft von Patent- und Rechtsanwälten mbB

(57) **Abstract**

The disclosure relates to a battery cell connecting structure (10), a battery pack and a vehicle. The battery cell connecting structure (10) includes: a cooler (100), arranged at one end of battery cell poles of the battery cells (20), and including a cavity (101) and configuration holes (102) in one-to-one correspondence with the battery cell pole; an electrical connector (200), for connection between the battery cell poles, where a partial region of the electrical connector (200) penetrates through the cavity (101), a partial region of the electrical connector is exposed at the corresponding configuration hole (102) and is configured to be electrically connected with the battery cell poles, and the electrical connector (200) is connected with a circumference of the configuration holes (102) in a sealed mode; and an insulating heat dissipation medium, arranged in the cavity (101), and configured to cool the electrical connector (200) penetrated in the cavity.

## Description

### TECHNICAL FIELD

The disclosure relates to the technical field of new energy power batteries, in particular to a battery cell connecting structure, a battery pack and a vehicle.

### BACKGROUND

In a power battery of a new energy vehicle, high-voltage connection between battery cells is mainly realized by welding of aluminum bars. A flow area of the aluminum bar (a cross-sectional area where a current flows through the aluminum bar and which is perpendicular to a direction of the current) is adjusted according to a charging/discharging current of a battery pack. In response to determining that the current is large, it is necessary to increase the flow area of the aluminum bar, i.e. to increase a size of the aluminum bar, to prevent a situation that the flow area is excessively small and a charging/discharging process generates a large amount of heat affecting the safety performance of the battery cell.

### SUMMARY

The disclosure aims to provide a battery cell connecting structure, a battery pack and a vehicle. The battery cell connecting structure highly integrates an electrical connector and a cooler, can enhance a heat dissipation capacity of the electrical connector and a battery cell, greatly lowers a thermal runaway risk of a battery pack, and may increase a spatial utilization rate of the battery pack.

A first aspect of the disclosure provides a battery cell connecting structure, for electrical connection of a plurality of battery cells. The battery cell connecting structure includes: a cooler, arranged at one end of battery cell poles of the battery cells, and including a cavity and configuration holes in one-to-one correspondence with the battery cell poles; an electrical connector, for connection between the battery cell poles, where a partial region of the electrical connector penetrates through the cavity, another partial region of the electrical connector is exposed at the configuration holes and is configured to be electrically connected with the battery cell poles, and the electrical connector is connected with a circumference of the configuration holes in a sealed mode; and an insulating heat dissipation medium, arranged in the cavity, and configured to cool the electrical connector penetrated in the cavity.

Optionally, the cooler further includes a liquid inlet and a liquid outlet communicating with the cavity. The liquid inlet is configured to input the insulating heat dissipation medium into the cavity and the liquid outlet is configured to discharge the insulating heat dissipation medium.

Optionally, the liquid inlet is arranged on a side of the cooler, and the liquid outlet is arranged at another end of the cooler opposite to the liquid inlet.

Optionally, the cooler includes an upper plate and a lower plate which are connected to each other, a plurality of first through holes in one-to-one correspondence with the battery cell poles are formed in the upper plate, a plurality of second through holes in one-to-one correspondence with the battery cell poles are formed in the lower plate, and among the plurality of first through holes and second through holes, the first through hole and the second through hole corresponding to each other form the configuration hole.

Optionally, the electrical connector is constructed as a cooling part and a connection part, the cooling part penetrates in the cavity, the connection part is exposed to the configuration holes, and an observation hole is formed in the connection part.

Optionally, the battery cell connecting structure further includes a first output connector and a second output connector;

One end of the first output connector extends into the cooler and is connected with one of a positive pole or a negative pole of the battery cell poles, and one end of the second output connector extends into the cooler and is connected with the other one of the positive pole or the negative pole of the battery cell poles.

Optionally, the cooler is made of an electrically insulating material; and/or,
the electrical connector is made of an aluminum bar.

A second aspect of the disclosure further provides a battery pack. The battery pack includes a plurality of battery cells and the above battery cell connecting structure.

Optionally, the plurality of battery cells are arranged in multiple columns, each column constitutes a battery cell set, each battery cell set corresponds to one battery cell connecting structure, and every two adjacent battery cell connecting structures are connected through a bridging aluminum bar.

A third aspect of the disclosure further provides a vehicle. The vehicle includes the above battery pack.

Through the above technical solution, i.e. the battery cell connecting structure in the disclosure, the electrical connector is used for electrical connection of the battery cell poles between the plurality of battery cells. The partial region of the electrical connector penetrates through the cavity of the cooler and is immersed in the insulating heat dissipation medium. Another partial region of the electrical connector is exposed at the configuration holes and is configured to be electrically connected with the battery cell poles. In charging/discharging process, heat generated by the battery cells and the electrical connector can be absorbed by the insulating heat dissipation medium, a heat dissipation area is increased, a heat dissipation capacity is improved, and thermal runaway caused by an excessively high temperature is prevented. At the same time, the electrical connector is highly integrated with the cooler, so a spatial utilization rate of a battery pack may be improved.

Other features and advantages of the disclosure will be described in detail in the following detailed description part.

### BRIEF DESCRIPTION OF THE DRAWINGS

The accompany drawings are used to facilitate further understanding of the disclosure, constitute a part of the specification, and together with the detailed description below serve to explain the disclosure, without constituting any limitation to the disclosure. In the drawings:
Fig. 1 is a structural diagram of a battery cell connecting structure provided by some examples of the disclosure.
Fig. 2 is a structural diagram of a battery cell connecting structure provided by some examples of the disclosure, where an upper plate is hidden.
Fig. 3 is a top view of a battery cell connecting structure provided by some examples of the disclosure.
Fig. 4 is a sectional diagram based on A-A in Fig. 3.
Fig. 5 is a diagram of an enlarged part in Fig. 4.
Fig. 6 is a sectional diagram based on B-B in Fig. 3.
Fig. 7 is a sectional diagram based on C-C in Fig. 3.
Fig. 8 is a structural diagram of a battery cell connecting structure provided by some other examples of the disclosure.
Fig. 9 is a structural diagram of a battery cell connecting structure provided by some other examples of the disclosure, where an upper plate is hidden.
Fig. 10 is a top view of a battery cell connecting structure provided by some other examples of the disclosure.
Fig. 11 is a sectional diagram based on D-D in Fig. 10.
Fig. 12 is a schematic diagram of connection between a battery cell of a battery pack and a battery cell connecting structure provided by some examples of the disclosure.
Fig. 13 is a schematic diagram of connection between a battery cell of a battery pack and a battery cell connecting structure provided by some other examples of the disclosure.

### DETAILED DESCRIPTION

Specific implementations of the disclosure will be described in detail in conjunction with the accompanying drawings. It should be understood that the specific implementations described here are merely used to illustrate and explain the disclosure, and are not intended to limit the disclosure.

In the disclosure, unless otherwise conversely specified, positional words used such as "inside and outside" refer to the inside and outside of a contour of the corresponding component; and "far and near" mean that the corresponding structure or corresponding component is far away from or close to another structure or component. In addition, the terms "first", "second", etc. used in the disclosure are intended to distinguish one element from another, and are not sequential or important. Further, in the following description, when referring to the drawings, the same marks in different drawings indicate the same or similar elements, unless otherwise explained. The foregoing definitions are intended merely to explain and illustrate the disclosure and should not be construed as a limitation on the disclosure.

With increasing requirements for performance of fast charging and output power of power batteries, charging/discharging current of a battery pack is becoming increasingly large. In order to ensure safety of the battery pack under the circumstance of a large current, flow area of an aluminum bar needs to be increased at the same time to improve a heat dissipation capacity, which may prevent thermal runaway of the battery pack caused by excessively high temperature rise. However, with increasingly high requirements for spatial utilization rate and integration degree of the battery pack, a size of the aluminum bar cannot be increased indefinitely. That is, the flow area of the aluminum bar is limited, and the aluminum bar will release a large amount of heat when encountering high current working conditions, which will affect the safety performance of a battery cell. Hence, it has become an urgent technical difficulty to improve the heat dissipation capacity of the aluminum bar and ensure safety of the battery cell while ensuring the spatial utilization rate, integration degree and assembling efficiency of the battery pack.

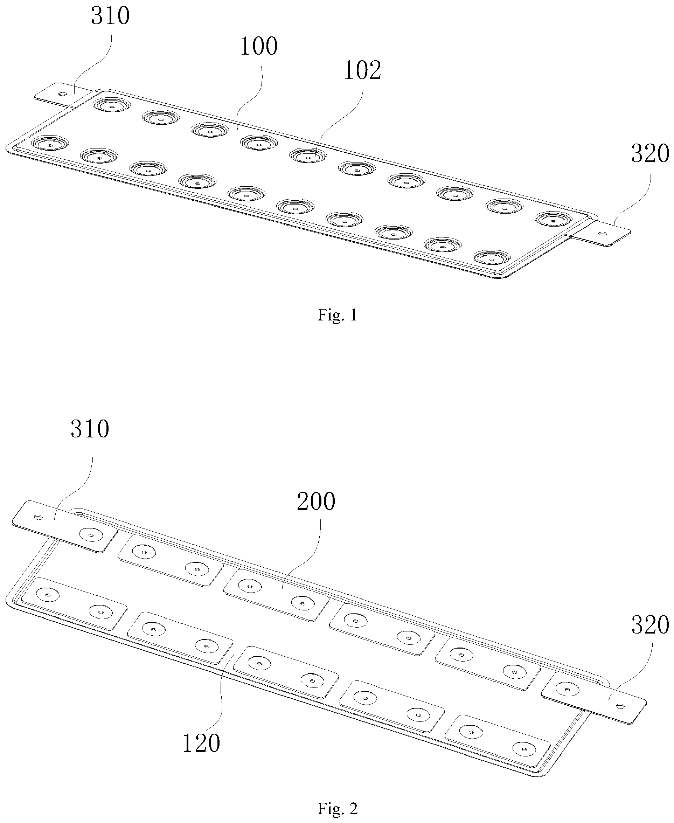

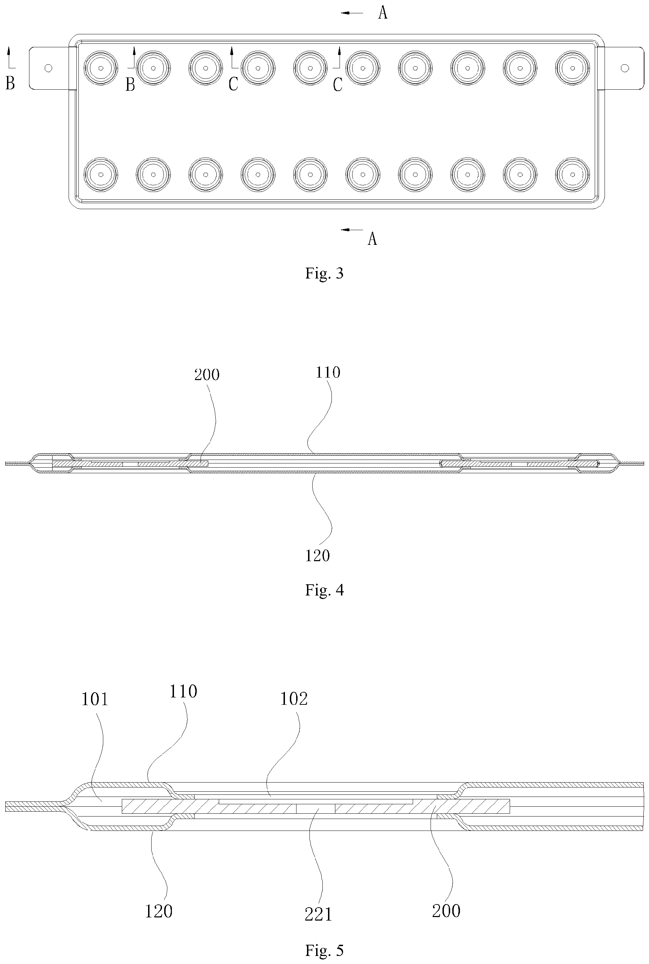

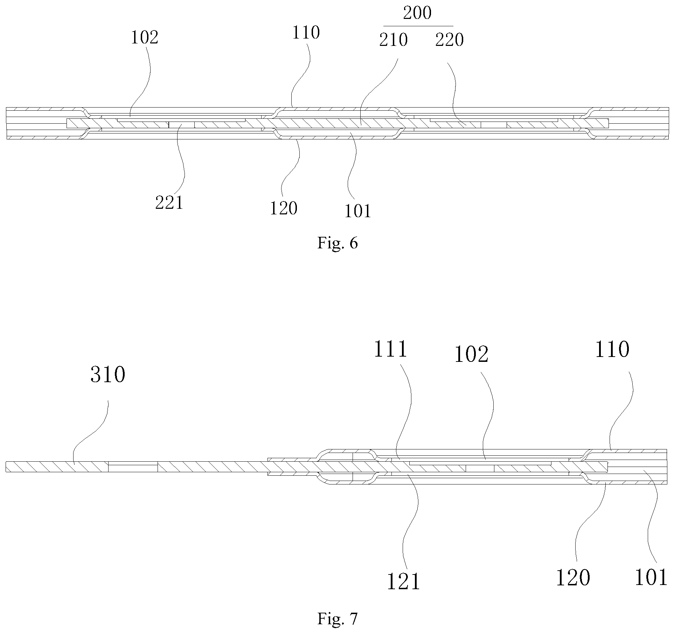

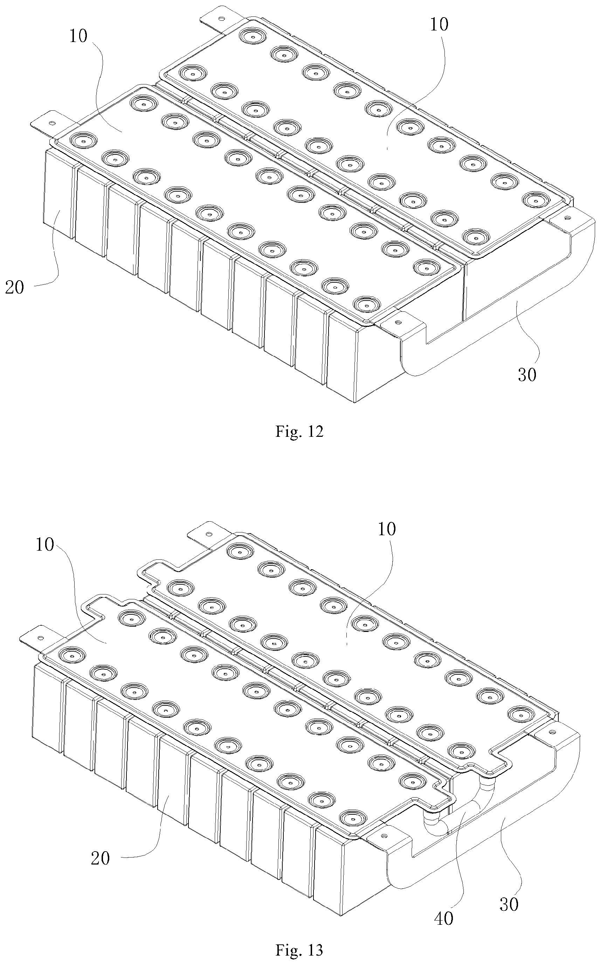

As shown in Fig. 1 to Fig. 13, to achieve the above objectives, a first aspect of the disclosure provides a battery cell connecting structure 10, for electrical connection of a plurality of battery cells 20. The battery cell connecting structure 10 includes: a cooler 100, arranged at one end of battery cell poles of the battery cells 20, and including a cavity 101 and configuration holes 102 in one-to-one correspondence with the battery cell poles; an electrical connector 200, for connection between the battery cell poles, where a partial region of the electrical connector 200 penetrates through the cavity 101, another partial region of the electrical connector 200 is exposed at the configuration holes 102 and is configured to be electrically connected with the battery cell poles, and the electrical connector 200 is connected with a circumference of the configuration holes 102 in a sealed mode; and an insulating heat dissipation medium, arranged in the cavity 101, and configured to cool the electrical connector 200 penetrated in the cavity 101.

Through the above technical solution, i.e. the battery cell connecting structure 10 in the disclosure, the electrical connector 200 is used for electrical connection of the battery cell poles between the plurality of battery cells 20. The partial region of the electrical connector 200 penetrates through the cavity 101 of the cooler 100 and is immersed in the insulating heat dissipation medium. Another partial region of the electrical connector 200 is exposed at the configuration holes 102 and is configured to be electrically connected with the battery cell poles. In charging/discharging process, heat generated by the battery cells 20 and the electrical connector 200 can be absorbed by the insulating heat dissipation medium, a heat dissipation area is increased, a heat dissipation capacity is improved, and thermal runaway caused by an excessively high temperature is prevented. At the same time, the electrical connector 200 is highly integrated with the cooler 100, so a spatial utilization rate of a battery pack may be improved.

It should be understood that in some examples, the plurality of battery cells 20 in the battery pack may be arranged closely adjacent to one another in a column, each battery cell 20 includes two battery cell poles, one battery cell pole is the positive pole, and the other battery cell pole is the negative pole. The configuration holes 102 on the cooler 100 in the battery cell connecting structure 10 are in one-to-one correspondence with the plurality of battery cell poles of the battery cells 20 arranged in the above manner. That is, the configuration holes 102 on the cooler 100 are arranged in two columns, the plurality of configuration holes 102 on each column are arranged at intervals, spacing between every two configuration holes corresponds to a width of each battery cell 20, the configuration holes 102 at two columns correspond to each other in a one-to-one mode in an extending direction of a connecting line between the two battery cell poles of each battery cell 20, and the spacing between the two configuration holes 102 corresponds to a distance between the two battery cell poles on the same battery cell 20. The electrical connector 200 may connect the plurality of battery cells 20 in series in any proper manner. That is, the positive pole of the battery cell poles in one battery cell 20 may be connected to the negative pole in the battery cell pole of the following battery cell 20 through one electrical connector 200, the negative pole of the battery cell poles in one battery cell 20 may be connected to the positive pole in the battery cell pole of the following battery cell 20 through one electrical connector 200, and the plurality of battery cells 20 are connected in series by connecting the positive poles and the negative poles in sequence; and the positive pole and the negative pole of an outermost battery cell 20 are leaded out by using the electrical connector 200 and are used for being connected with other external modules, such as a charging module or a motor.

In some examples, the electrical connector 200 may be made of an aluminum bar. In addition, the electrical connector 200 may also be made of a material which is smaller in value of resistance and is conducive to conduction, such as a copper bar, as long as electrical connection may be realized between the battery cells 20, which will not be specifically limited here.

There may be a plurality of electrical connectors 200, and the electrical connector 200 may be arranged inside the cooler 100 in any proper manner. A size, the quantity and a structural form of the electrical connectors 200 (for example, the aluminum bars) needs to be determined according to performance requirements of the battery pack, parameters of the battery cells 20 and arrangement of the battery cell 20.

It should be noted that the insulating heat dissipation medium needs to be a medium good in insulating performance, good in heat dissipation performance and high in specific heat capacity, such as a fluorinated fluid, so that the insulating heat dissipation medium can be insulated from the electrical connector 200 (for example, the aluminum bar) while good heat absorption and heat dissipation capacity is ensured. A part of the electrical connector 200 needing to be welded to the battery cell pole is exposed at the configuration hole 102, and the remaining part is completely located inside the cavity 101 and immersed in the insulating heat dissipation medium. In this way, heat generated in a charging/discharging process may be absorbed by the insulating heat dissipation medium, and cooling of the electrical connector 200 is realized.

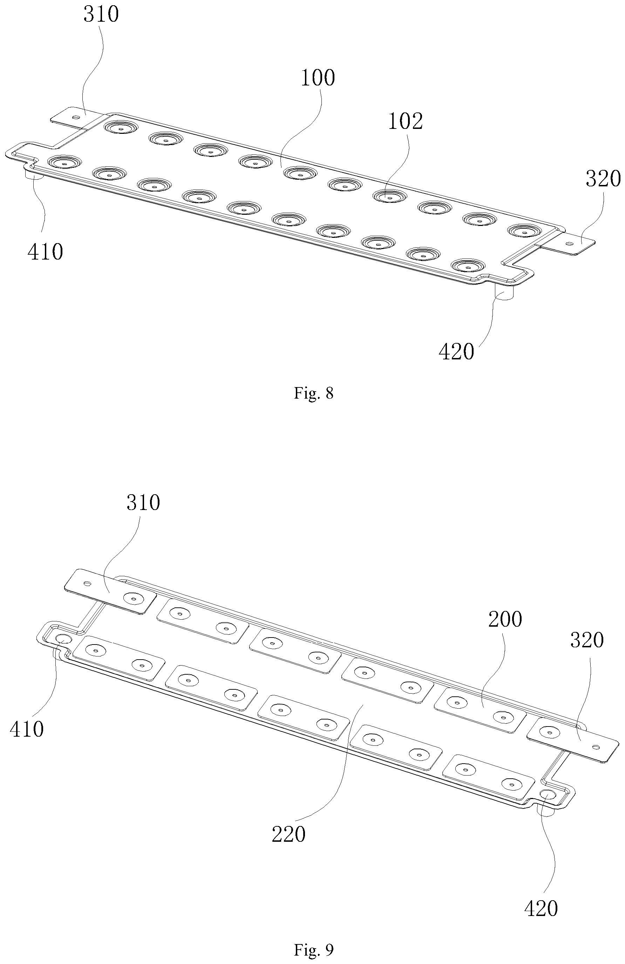

To further improve the heat dissipation capacity, as shown in Fig. 8, Fig. 9 and Fig. 10, in some examples, the cooler 100 further includes a liquid inlet 410 and a liquid outlet 420 communicating with the cavity 101. The liquid inlet 410 is configured to input the insulating heat dissipation medium into the cavity 101 and the liquid outlet 420 is configured to discharge the insulating heat dissipation medium. The insulating heat dissipation medium may enter the cavity 101 of the cooler 100 through the liquid inlet 410, take away heat generated by the electrical connector 200 by flowing pass all parts of the electrical connector 200 inside the cavity 101, and flow out from the liquid outlet 420, so that cooling of the electrical connector 200 and the battery cells 20 is realized. Because the insulating heat dissipation medium is in a flowing state in the cavity 101, the heat generated by the electrical connector 200 may be better taken away. The liquid inlet 410 and the liquid outlet 420 may also be respectively connected to one heat exchanger. That is, the insulating heat dissipation medium to be discharged from the liquid outlet 420 exchanges heat with other cooling medium in the heat exchanger, heat in the insulating heat dissipation medium is taken away, and the insulating heat dissipation medium then enters the cavity 101 through the liquid inlet 410, so that the heat dissipation capacity of the insulating heat dissipation medium is improved.

It should be noted that, insulation of the insulating heat dissipation medium refers to conduction insulation from the electrical connector 200, and heat dissipation refers to that the insulating heat dissipation medium can take away the heat generated by the electrical connector 200 and transmit the heat to the outside.

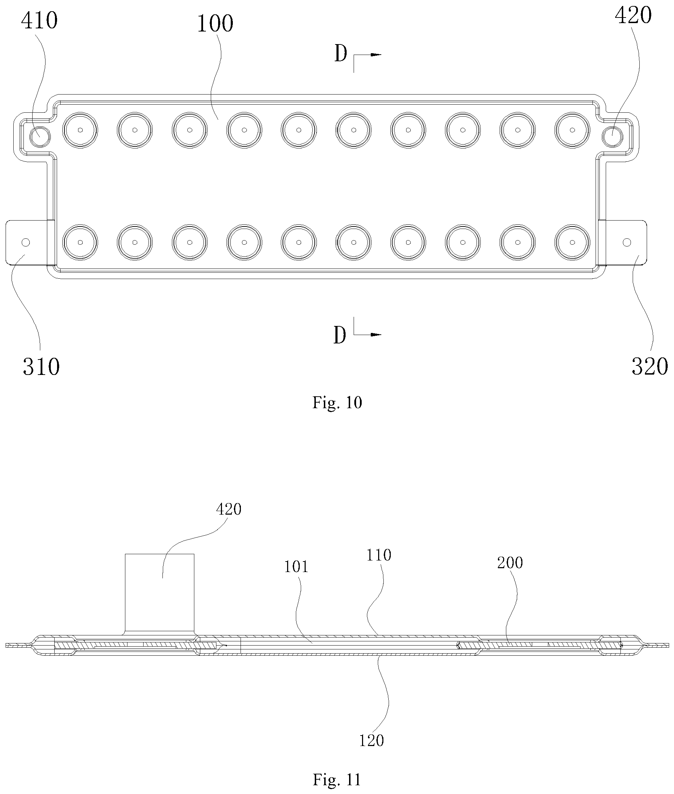

The liquid inlet 410 and the liquid outlet 420 may be constructed in any proper manner. Their location on the cooler 100 may also be arranged arbitrarily. In order to enable the insulating heat dissipation medium that enters the cavity 101 to flow past every electrical connector 200, as shown in Fig. 10, in some examples, the liquid inlet 410 is arranged on one side of the cooler 100, and the liquid outlet 420 is arranged one another side of the cooler 100 opposite to the liquid inlet 410. That is, the liquid inlet 410 and the liquid outlet 420 are respectively arranged on two opposite sides of the cooler 100, so that the insulating heat dissipation medium enters one end of the cavity 101 through the liquid inlet 410, flows to the opposite side in the cavity 101, then flows out through the liquid outlet 420 at the side, and cooling of the electrical connector 200 and the battery cells 20 is realized.

The cooler 100 may be constructed in any proper manner. In some examples, the cooler 100 includes an upper plate 110 and a lower plate 120 which are connected to each other, a plurality of first through holes 111 in one-to-one correspondence with the battery cell poles are formed in the upper plate 110, a plurality of second through holes 121 in one-to-one correspondence with the battery cell poles are formed in the lower plate 120, and among the plurality of first through holes 111 and second through holes 121, the first through hole 111 and the second through hole 121 corresponding to each other form the configuration hole 102. The lower plate 120 and the upper plate 110 may be made of a plastic part, a PET film, a PI film, or other easy-to-formed materials good in insulating performance. The upper plate 110 and the lower plate 120 jointly define a cavity 101. The plurality of first through holes 111 in the upper plate 110 and the plurality of second through holes 121 in the lower plate 120 are in one-to-one correspondence, and the first through hole 111 and the second through hole 121 corresponding to each other form the configuration hole 102. A part of the electrical connector 200 seals the configuration hole 102 in a circumferential direction of the configuration hole 102, so that the insulating heat dissipation medium in the cavity 101 is prevented from leaking through the configuration hole 102.

In some examples, the upper plate 110 and the lower plate 120, and the electrical connection member 200 may be formed by integral injection molding or hot press molding, or other methods such as gluing, as long as sealing performance at a connection position between the upper plate 110 and the lower plate 120 of the cooler 100, at a connection position between the upper plate 110 and the electrical connector 200, and at a connection position between the lower plate 120 and the electrical connector 200 is ensured.

In order to facilitate electrical connection with the battery cell poles of the battery cells 20, in some examples, the electrical connector 200 is constructed as a cooling part 210 and a connection part 220, the cooling part 210 penetrates in the cavity 101, the connection part 220 is exposed to the configuration holes 102, and an observation hole 221 for welding with the battery cell poles is formed in the connection part 220. The connection part 220 is a region of the electrical connector 200 exposed at the configuration hole 102, and the observation hole 221 may be arranged in the region. A location and size of the observation hole 221 may be arranged correspondingly according to a size of the battery cell poles. That is, the battery cell poles are in face contact with the connection part 220 at the position of the configuration hole 102, and are welded; alignment of the battery cell poles may be performed through the observation hole 221, so that fixed connection can be realized through a welding manner.

It should be noted that the observation hole 221 may be constructed in any proper manner. In some examples, the observation 221 may include a first hole section and a second hole section communicating with each other, and a diameter of the first hole section is larger than a diameter of the second hole section. The second hole section is closer to the battery cell 20, a small hole formed by the second hole section is for facilitating observation of welding between the connection part 220 and the battery cell pole. To facilitate alignment during welding, the diameter of the first hole section is relatively large, and a counterbore is formed on a surface of the section out of welding consideration. Because an excessively thick busbar cannot be welded due to equipment reasons, the counterbore is formed at the connection part 220, so a thickness is reduced, and welding is convenient.

In order to realize high-voltage electrical connection with other modules, in some examples, the battery cell connecting structure 10 further includes a first output connector 310 and a second output connector 320. One end of the first output connector 310 extends into the cooler 100 and is connected with one of a positive pole or a negative pole of the battery cell poles, and one end of the second output connector 320 extends into the cooler 100 and is connected with the other one of the positive pole or the negative pole of the battery cell poles. The first output connector 310 and the second output connector 320 include but are not limited to aluminum bars.

The first output connector 310 penetrates through the cavity 101, extends to the configuration hole 102 at an extreme edge, and is connected to the battery cell poles of the positive pole of the outermost battery cell 20; and a part of the first output connector 310 located in the cavity 101 is immersed in the insulating heat dissipation medium, and a part of the first output connector 310 located at an outer side of the cooler 100 may form a wiring terminal, so that high-voltage connection with other modules is realized. The second output connector 320 penetrates through the cavity 101, extends to the configuration hole 102 at an extreme edge, and is connected to the battery cell poles of the negative pole of the outermost battery cell 20; and a part of the second output connector 320 located in the cavity 101 is immersed in the insulating heat dissipation medium, and a part of the second output connector 320 located at an outer side of the cooler 100 may form another wiring terminal, so that high-voltage connection with other modules is realized.

The upper plate 110 and lower plate 120 of the cooler 100 and the electrical connector 200 form a closed cavity 101, and the closed cavity 101 is filled with the insulating heat dissipation medium. A middle part of the electrical connector 200 (for example, the aluminum bar) needing to be welded to the battery cell pole is exposed at the configuration role hole 102, and the remaining part of the electrical connector 200 is located in the cavity 101 and immersed in the insulating heat dissipation medium. The insulating heat dissipation medium in the closed cavity 101 is used for absorbing the heat of the electrical connector 200 and diffuses to the outside, and heat dissipation is complete. The first output connector 310 and the second output connector 320 are used for being connected with other external modules, and charging and/or discharging of the battery cell 20 is realized.

In a situation that no cooling system or heat dissipation system is arranged for a high-voltage connecting aluminum bar between battery cells 20 in an existing battery pack, an flow area of the high-voltage connecting aluminum bar is usually adjusted correspondingly according to a magnitude of a charging/discharging current of the battery pack, that is, a size of the high-voltage connecting aluminum bar is adjusted. With increasing requirements for performance of fast charging and output power of power batteries, a current of battery pack is increasing, and the flow area and heat dissipation capacity of the high-voltage connecting aluminum bar are also getting higher and higher. However, due to space limitations, the flow area of the aluminum bar cannot be increased indefinitely. According to the technical solution of the disclosure, the cooler 100 is added to the high-voltage connecting aluminum bar, the aluminum bar is highly integrated with the cooler 100, the heat dissipation capacity of the aluminum bar and the battery cells 20 may be increased, a thermal runaway risk of the battery pack may be greatly lowered, a spatial utilization rate of the battery pack may be increased, a high integration degree and assembly efficiency of battery packs are ensured.

A second aspect of the disclosure further provides a battery pack. The battery pack may include a plurality of battery cells 20 and the above battery cell connecting structure 10. The battery cell connecting structure 10 is used for connecting battery cell poles of the plurality of battery cells 20. High-voltage connection between the battery cells 20 may be realized, heat dissipation capacity can be improved, and even in a large current working condition, most of heat can be taken away, so thermal runaway caused by excessively high temperature is prevented. In the meantime, assembly is convenient, and high integration degree and assembling efficiency of the battery pack are ensured.

After the battery cells 20 are piled, an electrical connector 200 is respectively welded to the battery cell poles, and high-voltage connection between the battery cells 20 is realized. The quantity, length and height of the electrical connector 200 and the cooler 100 may be adjusted according to a space of the battery pack and an arrangement of the battery cells 20, and high-voltage connection between adjacent high-voltage connecting aluminum bars and between heat dissipation systems is realized through bridging aluminum bars 30.

In some examples, the plurality of battery cells 20 are arranged in multiple columns, each column constitutes a battery cell set, each battery cell set may include a plurality of battery cells 20 arranged in parallel, each battery cell set corresponds to one battery cell connecting structure 10, and every two adjacent battery cell connecting structures 10 are connected through a bridging aluminum bar 30. That is, electrical connection between the battery cells 20 can be realized, and heat dissipation of the battery cells 20 may be performed by using a plurality of battery cell connecting structures 10.

In some examples, the cooler 100 further includes a liquid inlet 410 and a liquid outlet 420 communicating with the cavity 101, the liquid inlet 410 is configured to input the insulating heat dissipation medium into the cavity 101, and the liquid outlet 420 is configured to discharge the insulating heat dissipation medium.

In some examples, the liquid inlet 410 is arranged on one side of the cooler 100, and the liquid outlet 420 is arranged on the other side of the cooler 100 opposite to the liquid inlet 410.

In some examples, the cooler 100 includes an upper plate 110 and a lower plate 120 which are connected to each other, a plurality of first through holes 111 in one-to-one correspondence with the battery cell poles are formed in the upper plate 110, a plurality of second through holes 121 in one-to-one correspondence with the battery cell poles are formed in the lower plate 120, and among the plurality of first through holes 111 and second through holes 121, the first through hole 111 and the second through hole 121 corresponding to each other form the configuration hole 102.

In some examples, the electrical connector 200 is constructed as a cooling part 210 and a connection part 220, the cooling part 210 penetrates into the cavity 101, the connection part 220 is exposed to the configuration holes 102, and an observation hole 221 is formed in the connection part 220.

In some examples, the battery cell connecting structure 10 further includes a first output connector 310 and a second output connector 320, one end of the first output connector 310 extends into the cooler 100 and is connected with one of a positive pole or a negative pole of the battery cell poles, and one end of the second output connector 320 extends into the cooler 100 and is connected with the other one of the positive pole or the negative pole of the battery cell poles.

In some examples, the cooler 100 is made of an insulating material, and/or, the electrical connector 200 is made of an aluminum bar.

It should be noted that, in some examples, in response to determining that each cooler 100 includes a liquid inlet 410 and a liquid outlet 420, and the liquid inlets 410 and/or the liquid outlets 420 may be connected in series through a connecting pipeline 40, so that insulating heat dissipation medium is delivered through one liquid inlet 410 and flows out from another liquid inlet 410 or a liquid outlet 420, and flowing of the insulating heat dissipation medium can be realized. For example, in response to determining that there are two battery cell connecting structures 10, the liquid outlet 420 and the liquid inlet 410 located at the same end may communicate with each other, or the two liquid inlets 410 may communicate with each other through the connecting pipeline 40; and the liquid inlet 410 and liquid outlet 420 at the other end, or the two liquid outlets 420 are respectively connected with an insulating heat dissipation medium circulating system, so that flowing of the insulating heat dissipation medium is realized.

Certainly, the insulating heat dissipation medium is respectively conducted into and discharged from each cooler 100, and also flowing of the insulating heat dissipation medium in the cavity 101 can be realized.

A third aspect of the disclosure further provides a vehicle. The vehicle includes the above battery pack, so the vehicle has all advantages of the above battery pack, which will not be repeated here.

According to the battery cell connecting structure 10, the battery pack and the vehicle of the disclosure, the electrical connector 200 of the battery cell connecting structure 10 are used for electrical connection of the battery cell poles between the plurality of battery cells 20. The partial region of the electrical connector 200 penetrates through the cavity 101 of the cooler 100 and is immersed in the heat dissipation medium. Another partial region of the electrical connector 200 is exposed at the configuration holes 102 and is configured to be electrically connected with the corresponding battery cell poles. In a charging/discharging process, heat generated by the battery cells 20 and the electrical connector 200 can be absorbed by the heat dissipation medium, a heat dissipation area is increased, a heat dissipation capacity is improved, and thermal runaway caused by an excessively high temperature is prevented. At the same time, the electrical connector 200 is highly integrated with the cooler 100, so a spatial utilization rate of a battery pack may be improved. In the above technical solution, the cooler 100 is added for the electrical connector 200 (for example, the aluminum bar), the size of the electrical connector 200 does not need to be increased in a large current working condition, the heat dissipation capacity and safety of the battery pack are ensured, a weight of the battery pack is reduced, and cost is lowered; and furthermore, the electrical connector 200 is highly integrated with the cooler 100, and the spatial utilization rate and integration degree of the battery pack are greatly improved. The electrical connector 200 and the cooler 100 may be directly welded to the battery cell poles at the configuration hole 102, so the assembling efficiency of the battery pack is improved.

The preferred examples of the disclosure are described above in detail in conjunction with the accompanying drawings. However, the disclosure is not limited to the specific details of the above examples. Within the scope of the technical conception of the disclosure, a variety of simple variations may be made to the technical solution of the disclosure, and these simple variants fall within the scope of protection of the disclosure.

In addition, it should be noted that specific technical features described in the above specific examples, without contradiction, may be combined in any suitable way. In order to avoid unnecessary repetition, the disclosure will not otherwise describe various possible combinations.

## Claims

1. A battery cell connecting structure, for electrical connection of a plurality of battery cells (20), wherein the battery cell connecting structure (10) comprises:
a cooler (100), arranged at one end of battery cell poles of the battery cells (20), and comprising a cavity (101) and configuration holes (102) in one-to-one correspondence with the battery cell poles;
an electrical connector (200), for connection between the battery cell poles, wherein a partial region of the electrical connector (200) penetrates through the cavity (101), another partial region of the electrical connector (200) is exposed at the configuration holes (102) and is configured to be electrically connected with the battery cell poles, and the electrical connector (200) is connected with a circumference of the configuration holes (102) in a sealed mode; and
an insulating heat dissipation medium, arranged in the cavity (101), and configured to cool the electrical connector (200) penetrated in the cavity (101).

2. The battery cell connecting structure according to claim 1, wherein the cooler (100) further comprises a liquid inlet (410) and a liquid outlet (420) communicating with the cavity (101), the liquid inlet (410) is configured to input the insulating heat dissipation medium into the cavity (101), and the liquid outlet (420) is configured to discharge the insulating heat dissipation medium.

3. The battery cell connecting structure according to claim 2, wherein the liquid inlet (410) is arranged on one side of the cooler (100), and the liquid outlet (420) is arranged on another side of the cooler (100) opposite to the liquid inlet (410).

4. The battery cell connecting structure according to and one of claims 1 to 3, wherein the cooler (100) comprises an upper plate (110) and a lower plate (120) which are connected to each other, a plurality of first through holes (111) in one-to-one correspondence with the battery cell poles are formed in the upper plate (110), a plurality of second through holes (121) in one-to-one correspondence with the battery cell poles are formed in the lower plate (120), and among the plurality of first through holes (111) and second through holes (121), the first through hole (111) and the second through hole (121) corresponding to each other form the configuration hole (102).

5. The battery cell connecting structure according to and one of claims 1 to 4, wherein the electrical connector (200) is constructed as a cooling part (210) and a connection part (220), the cooling part (210) penetrates into the cavity (101), the connection part (220) is exposed to the configuration holes (102), and an observation hole (221) is formed in the connection part (220).

6. The battery cell connecting structure according to and one of claims 1 to 5, wherein the battery cell connecting structure (10) further comprises a first output connector (310) and a second output connector (320), wherein
one end of the first output connector (310) extends into the cooler (100) and is connected with one of a positive pole or a negative pole of the battery cell poles, and one end of the second output connector (320) extends into the cooler (100) and is connected with the other one of the positive pole or the negative pole of the battery cell poles.

7. The battery cell connecting structure according to and one of claims 1 to 6 , wherein the cooler (100) is made of an electrically insulating material; and/or, the electrical connector (200) is made of an aluminum bar.

8. A battery pack, comprising a plurality of battery cells (20) and a battery cell connecting structure (10), the battery cell connecting structure (10) comprises:
a cooler (100), arranged at one end of battery cell poles of the battery cells (20), and comprising a cavity (101) and configuration holes (102) in one-to-one correspondence with the battery cell poles;
an electrical connector (200), for connection between the battery cell poles, wherein a partial region of the electrical connector (200) penetrates through the cavity (101), another partial region of the electrical connector (200) is exposed at the configuration holes (102) and is configured to be electrically connected with the battery cell poles, and the electrical connector (200) is connected with a circumference of the configuration holes (102) in a sealed mode; and
an insulating heat dissipation medium, arranged in the cavity (101), and configured to cool the electrical connector (200) penetrated in the cavity (101).

9. The battery pack according to claim 8, wherein the plurality of battery cells (20) are arranged in multiple columns, each column constitutes a battery cell set, each battery cell set corresponds to one battery cell connecting structure (10), and every two adjacent battery cell connecting structures (10) are connected through a bridging aluminum bar (30).

10. The battery pack according to claim 8 or 9, wherein the cooler (100) further comprises a liquid inlet (410) and a liquid outlet (420) communicating with the cavity (101), the liquid inlet (410) is configured to input the insulating heat dissipation medium into the cavity (101), and the liquid outlet (420) is configured to discharge the insulating heat dissipation medium.

11. The battery pack according to any one of claims 8 to 10, wherein the liquid inlet (410) is arranged on one side of the cooler (100), and the liquid outlet (420) is arranged on another side of the cooler (100) opposite to the liquid inlet (410).

12. The battery pack according to any one of claims 8 to 11, wherein the cooler (100) comprises an upper plate (110) and a lower plate (120) which are connected to each other, a plurality of first through holes (111) in one-to-one correspondence with the battery cell poles are formed in the upper plate (110), a plurality of second through holes (121) in one-to-one correspondence with the battery cell poles are formed in the lower plate (120), and among the plurality of first through holes (111) and second through holes (121), the first through hole (111) and the second through hole (121) corresponding to each other form the configuration hole (102).

13. The battery pack according to any one of claims 8 to 12, wherein the electrical connector (200) is constructed as a cooling part (210) and a connection part (220), the cooling part (210) penetrates into the cavity (101), the connection part (220) is exposed to the configuration holes (102), and an observation hole (221) is formed in the connection part (220).

14. The battery pack according to any one of claims 8 to 13, wherein the battery cell connecting structure (10) further comprises a first output connector (310) and a second output connector (320), wherein
one end of the first output connector (310) extends into the cooler (100) and is connected with one of a positive pole or a negative pole of the battery cell poles, and one end of the second output connector (320) extends into the cooler (100) and is connected with the other one of the positive pole or the negative pole of the battery cell poles.

15. A vehicle, comprising a battery pack according to any one of claims 8 or 14..
